# EUROPÄISCHE PATENTSCHRIFT

(11) **EP 3 546 179 B1**
(45) Veröffentlichungstag und Bekanntmachung des Hinweises auf die Patenterteilung: **13.01.2021**
(21) Anmeldenummer: 18164531.8
(22) Anmeldetag: 28.03.2018
(51) Int. Cl.: B29C 45/76, B29C 45/77, B29C 45/78

(54) **VERFAHREN ZUM REPRODUZIEREN EINER SPRITZGIESSTEILEQUALITÄT BEIM SPRITZGIESSEN UND SPRITZGIESSANLAGE ZUM DURCHFÜHREN DES VERFAHRENS**
METHOD FOR REPRODUCING AN INJECTION MOLDED PART QUALITY IN INJECTION MOLDING AND INJECTION MOLDING UNIT FOR PERFORMING SAID METHOD
PROCÉDÉ DE REPRODUCTION DE LA QUALITÉ DE PIÈCES MOULÉES PAR INJECTION LORS DU MOULAGE PAR INJECTION ET INSTALLATION DE MOULAGE PAR INJECTION DESTINÉE À LA MISE EN OUVRE DU PROCÉDÉ

(43) Veröffentlichungstag der Anmeldung: 02.10.2019
(73) Patentinhaber: Kistler Holding AG, 8408 Winterthur (CH)
(72) Erfinder: FICK, Daniel, 8280 Kreuzlingen (CH); MEYER, Dirk, 70182 Stuttgart (DE); LIEDL, Philipp, 70180 Stuttgart (DE)

(56) Entgegenhaltungen:
- EP-A1- 2 583 811
- EP-A2- 0 233 548
- DE-C1- 19 536 566

## Beschreibung

### Technisches Gebiet

Die Erfindung betrifft ein Verfahren zum Reproduzieren einer Spritzgiessteilequalität beim Spritzgiessen sowie eine Spritzgiessanlage zum Durchführen des Verfahrens nach dem Oberbegriff der unabhängigen Ansprüche.

### Stand der Technik

Spritzgiessen ist ein wichtiges Urformverfahren bei dem in einem einzigen Verfahrensschritt ein Spritzgiessteil mit komplexer Geometrie und nahezu beliebiger Grösse in grossen Stückzahlen mit gleichbleibend hoher Spritzgiessteilequalität produziert wird. Spritzgiessen erfolgt auf einer Spritzgiessanlage. Dazu wird eine Schmelze in einer Einspritzphase unter Druck in eine Kavität eines Spritzgiesswerkzeuges eingespritzt. Sobald die Schmelze die Kavität vollständig gefüllt hat, wird die Schmelze in einer Nachdruckphase zum Erstarren gebracht und kühlt dabei ab. In einer Restkühlphase kühlt die erstarrte Schmelze in der Kavität weiter ab und am Ende der Restkühlphase wird das fertige Spritzgiessteil aus der Kavität ausgestossen. Spritzgiessen ist ein zyklischer Produktionsprozess, in welchem die drei Phasen in sich wiederholenden Produktionszyklen nacheinander abgearbeitet werden. Die Schmelze kann aus Kunststoff, Metall, Keramik usw. sein.

Die drei Phasen sind für das produzierte Spritzgiessteil qualitätsbestimmend, das heisst je nachdem wie vom Bedienpersonal Maschinenparameter der Spritzgiessanlage eingestellt werden, erfüllt das produzierte Spritzgiessteil mindestens ein vordefiniertes Qualitätsmerkmal. So wird in der Einspritzphase mit einer Einspritzgeschwindigkeit als Maschinenparameter die Schmelze mit hohem Druck in die Kavität eingespritzt, während in der Nachdruckphase mit einer Nachdruckhöhe als Maschinenparameter ein Innendruck in der Kavität gehalten wird. Dabei wird vom Maschinenparameter Einspritzgeschwindigkeit auf den Maschinenparameter Nachdruckhöhe umgeschaltet. Wenn das Bedienpersonal zu früh auf die Nachdruckhöhe umschaltet, ist das Spritzgiessteil unvollständig ausgeformt. Schaltet das Bedienpersonal jedoch zu spät auf die Nachdruckhöhe um, treten im Spritzgiessteil nachteilige mechanische Spannungen auf. In beiden Fällen werden schlechte Spritzgiessteile oder Schlechtteile produziert, die das vordefinierte Qualitätsmerkmal nicht erfüllen. Für eine hohe Spritzgiessteilequalität ist es wünschenswert, eine Anzahl an Schlechteilen so gering wie möglich zu halten. Das ist aber schwierig, denn bereits Zusammensetzung und Viskosität der Schmelze sind nicht konstant und auch Umwelteinflüsse wie Druck und Temperatur der Atmosphäre verändern sich.

Die EP0897786B1 offenbart ein Verfahren zum Regeln einer Spritzgiessanlage, bei dem zum Bestimmen des Umschaltzeitpunktes mit einem Drucksensor ein zeitlicher Verlauf eines Innendruckes der Kavität erfasst und von einer Auswerteeinheit als Innendruckkurve dargestellt wird. Eine Zykluszeit eines typischen Produktionszyklus dauert einige Sekunden. Der zeitliche Verlauf des Innendruckes wird von einem piezoelektrischen Drucksensor mit einer Abtastfrequenz von 1kHz erfasst. Das Füllen der Kavität mit Schmelze während der Einspritzphase führt in einer kurzen Zeitspanne von weniger als einer Sekunde zu einem signifikanten Druckanstieg. Der Umschaltzeitpunkt liegt zeitlich kurz vor dem Erfassen eines maximalen Innendruckes. Dabei wird die Schmelze komprimiert. Der maximale Innendruck kann 500bar und mehr betragen. Ein Darstellen der Innendruckkurve erfolgt im Bruchteil einer Sekunde nach Ende des aktuellen Produktionszyklus. Ein produziertes Spritzgiessteil, welches das vordefinierte Qualitätsmerkmal erfüllt, wird Gutteil genannt. Die Innendruckkurve eines Produktionszyklus, bei dem ein Gutteil produziert worden ist, wird Referenzkurve genannt. Eine solche Referenzkurve ist in einem elektronischen Datenspeicher der Auswerteeinheit speicherbar und aus dem elektronischen Datenspeicher wieder abrufbar.

Gemäss EP0897786B1 wird eine erfasste Innendrucckurve des aktuellen Produktionszyklus mit einer Referenzkurve verglichen. Im Vergleich wird ermittelt, ob die erfasste Innendruckkurve einen vordefinierten Schwellenwert eines Maschinenparameters überschreitet. Falls die erfasste Innendruckkurve den Schwellenwert überschreitet, wird ein Maschinenparameter nachgeregelt. Beispielsweise wird für den Maschinenparameter Nachdruckhöhe die erfasste Innendruckkurve im Bereich von 90% des maximalen Innendruckes integriert und mit einem entsprechenden Integral der Referenzkurve verglichen. Wenn das Integral der erfassten Innendruckkurve einen Schwellenwert überschreitet, wird der Maschinenparameter Nachdruckhöhe nachgeregelt, um die im nachfolgenden Produktionszyklus erfasste Innendruckkurve an die Referenzkurve anzugleichen, um so die Spritzgiessteilequalität zu reproduzieren. Dazu wird ausreichend Reaktionszeit für das Regeln der Spritzgiessanlage vorgesehen, was die Zykluszeit verlängert.

Die EP2583811A1 bezieht sich auf ein Verfahren zur Quantifizierung von Prozessschwankungen bei einem Einspritzvorgang einer Spritzgiessmaschine. Der Spritzgiesszyklus wird in zwei Teile unterteilt, einen Dosiervorgang und einen Einspritzvorgang. Während des Einspritzvorgangs werden für den Einspritzvorgang charakteristische Grössen wie ein Forminnendruck gemessen. Messwerte des Forminnendruckes werden den jeweiligen Positionen einer Schnecke zugeordnet. Aus der Zuordnung der Messwerte des Forminnendruckes zur Position der Schnecke wird eine Messfunktion für mathematische Transformationen in eine Bildfunktion gebildet. Frei wählbare Transformationsparameter werden so bestimmt, dass die Bildfunktion bezüglich einer vorgängig bestimmten Referenzfunktion für jede Position der Schnecke ein vorbestimmtes Fehlermass einhält.

Die DE19536566C1 betrifft ein Verfahren zur Regelung eines Werkzeuginnendrucks an einer Kunststoff-Spritzgiessmaschine. Mit einem angussnah angeordneten Werkzeuginnendrucksensor wird ein Werkzeuginnendruckverlauf über der Zeit erfasst. Mit Mitteln der Differentialrechnung wird der Werkzeuginnendruckverlauf nach der Zeit differenziert, um so Unstetigkeiten zu entdecken. Wird so beispielsweise während der Nachdruckregelung eine Unstetigkeit entdeckt, so wird in einem nächsten Spritzzyklus eine Nachdruckzeit erhöht, um einen zu frühen Abbau des Nachdrucks zu vermeiden, andernfalls wird in einem nächsten Spritzzyklus die Nachdruckzeit erniedrigt.

Die EP0233548A2 bezieht sich auf ein Verfahren zur Regelung und Steuerung eines Spritzgiessprozesses. Eine Druckerfassungseinheit misst den Spritzdruck einer hydraulischen Verbindung eines Spritzylinderraums. Die EP0233548A2 unterscheidet einen Einspritzvorgang und ein Nachdrücken. Beim Einspritzvorgang wird Formmasse in einen Formhohlraum gepresst, und wenn der Formhohlraum gefüllt ist, wird auf Nachdrücken umgeschaltet, ein Förderstrom wird reduziert. Wenn zu früh umgeschaltet wird, dann ist der Formhohlraum noch nicht gefüllt und eine Differenz des Druckwertes bei Förderstromreduzierung und nach Förderstromreduzierung. Wird hingegen später umgeschaltet, dann ist der Formhohlraum bereits nahezu gefüllt und die Differenz des Druckwertes bei Förderstromreduzierung und nach Förderstromreduzierung ist gering. Und wenn genau dann umgeschaltet wird, wenn der Formhohlraum vollständig gefüllt ist, dann zeigt die Differenz des Druckwertes bei Förderstromreduzierung und nach Förderstromreduzierung einen Knick. Daher wird die Differenz des (maximalen) Druckes bei Förderstromreduzierung und des (minimalen) Druckes nach Förderstromreduzierung als Vergleichsgrösse für die Regelung, Steuerung verwendet.

Eine erste Aufgabe der vorliegenden Erfindung ist es, das Reproduzieren der Spritzgiessteilequalität beim Spritzgiessen weiter zu verbessern. Eine zweite Aufgabe der Erfindung besteht darin, das Reproduzieren der Spritzgiessteilequalität in möglichst kurzer Zykluszeit vorzunehmen. Auch stellt sich Erfindung die Aufgabe, das Reproduzieren der Spritzgiessteilequalität in möglichst wenigen Produktionszyklen vorzunehmen. Zudem ist es eine Aufgabe der Erfindung, Einstellungen von Maschinenparametern beim Reproduzieren der Spritzgiessteilequalität einem Bedienpersonal übersichtlich und transparent darzustellen.

### Darstellung der Erfindung

Zumindest eine der Aufgaben wird durch die Merkmale der unabhängigen Ansprüche gelöst.

Die Erfindung betrifft ein Verfahren zum Reproduzieren einer Spritzgiessteilequalität beim Spritzgiessen; wobei mit einem Spritzgiesswerkzeug ein Spritzgiessteil in einem Produktionszyklus mit mehreren Phasen produziert wird, in einer Einspritzphase wird eine Schmelze in eine Kavität des Spritzgiesswerkzeuges eingespritzt, in einer Nachdruckphase wird die Schmelze in der Kavität zum Erstarren gebracht und an einem Ende einer Restkühlphase wird die weiter abgekühlte Schmelze als Spritzgiessteil aus der Kavität ausgestossen; wobei ein zeitlicher Verlauf eines Innendruckes der Kavität erfasst wird und als Innendruckkurve dargestellt wird; wobei mindestens eine Innendruckkurve eines Produktionszyklus, in dem ein produziertes Spritzgiessteil mindestens ein vordefiniertes Qualitätsmerkmal erfüllt, als Referenzkurve verwendet wird; wobei in einem Vergleich ermittelt wird, ob eine Innendruckkurve eines aktuellen Produktionszyklus mindestens einen vordefinierten Schwellenwert überschreitet; und falls die Innendruckkurve des aktuellen Produktionszyklus den Schwellenwert überschreitet, mindestens ein aktueller Maschinenparameter verändert wird, um eine Innendruckkurve eines nachfolgenden Produktionszyklus an die Referenzkurve anzugleichen; wobei jeder Phase des Produktionszyklus ein Maschinenparameter zugeordnet wird, welcher zugeordnete Maschinenparameter den Innendruck in dieser Phase des Produktionszyklus stärker als nichtzugeordnete Maschinenparameter beeinflusst; und wobei die zugeordneten Maschinenparameter in mehreren Produktionszyklen in einer vordefinierten Reihenfolge verändert werden, wobei pro Produktionszyklus genau ein zugeordneter Maschinenparameter verändert wird.

Im Unterschied zur EP0897786B1 erfolgt im erfindungsgemässen Verfahren kein Regeln mit Regelparametern, sondern ein Verändern von Maschinenparametern. Die Erfindung beruht auf der Erkenntnis, dass es in jeder Phase des Spritzgiessens einen Maschinenparameter gibt, welcher den Innendruck in dieser Phase stärker als andere Maschinenparameter beeinflusst. Dieser Maschinenparameter wird der Phase zugeordnet. Durch Verändern des zugeordneten Maschinenparameters wird die Innendruckkurve phasenspezifisch an die Referenzkurve angeglichen.

Vorzugsweise wird dem Bedienpersonal in jeder Phase ein Wert eines zu verändernden zugeordneten Maschinenparameters auf mindestens einer Ausgabevorrichtung dargestellt. Das Bedienpersonal kann somit den Wert des zu verändernder zugeordnete Maschinenparameter an der Spritzgiessanlage einstellen. Das Bedienpersonal wird angeleitet, wie und in welcher Reihenfolge die Maschinenparameter zu verändern sind, was für das Bedienpersonal übersichtlich und transparent ist.

Es gibt also in jeder Phase des Spritzgiessens einen dieser Phase zugeordneten Maschinenparameter, der in dieser Phase einen stärksten Einfluss auf den Innendruck hat, der aber auch in den anderen Phasen einen, wenn auch geringeren Einfluss auf den Innendruck hat. Um daher beim Angleichen der erfassten Innendruckkurve an die Referenzkurve phasenübergreifende Einflüsse der Maschinenparameter gering zu halten, werden die zugeordneten Maschinenparameter in mehreren nachfolgenden Produktionszyklen in einer vordefinierten Reihenfolge verändert. Die Reihenfolge ist so vordefiniert, dass mit einem ersten zugeordneten Maschinenparameter erzielte Fortschritte beim Angleichen der erfassten Innendruckkurve an die Referenzkurve nicht durch die weiteren zugeordneten Maschinenparameter teilweise wieder rückgängig gemacht werden. Somit erfolgt ein effektives Angleichen der erfassten Innendruckkurve an die Referenzkurve in kurzer Zykluszeit und zudem auch in wenigen Produktionszyklen, wodurch sichergestellt wird, dass das produzierte Spritzgiessteil das vordefinierte Qualitätsmerkmal erfüllt.

### Kurze Beschreibung der Zeichnungen

Im Folgenden wird die Erfindung beispielhaft unter Beizug der Figuren näher erklärt. Es zeigen
- Fig. 1: eine schematische Darstellung eines Teiles einer Spritzgiessanlage zum Produzieren von Spritzgiessteilen in Produktionszyklen;
- Fig. 2: eine graphische Darstellung einer Innendruckkurve eines Produktionszyklus einer Spritzgiessanlage nach Fig. 1 mit einem Gutteil, welche als Referenzkurve verwendet wird;
- Fig. 3: eine graphische Darstellung der Referenzkurve nach Fig. 2 und einer Innendruckkurve eines aktuellen Produktionszyklus der Spritzgiessanlage nach Fig. 1;
- Fig. 4: eine graphische Darstellung der Referenzkurve nach Fig. 2 und der Innendruckkurve des aktuellen Produktionszyklus nach Fig. 3 sowie einer Innendrucckurve eines ersten nachfolgenden Produktionszyklus der Spritzgiessanlage nach Fig. 1 mit verändertem ersten Maschinenparameter;
- Fig. 5: eine graphische Darstellung der Referenzkurve nach Fig. 2 und der Innendruckkurve des aktuellen Produktionszyklus nach Fig. 3 sowie einer Innendrucckurve eines zweiten nachfolgenden Produktionszyklus der Spritzgiessanlage nach Fig. 1 mit verändertem zweiten Maschinenparameter;
- Fig. 6: eine graphische Darstellung der Referenzkurve nach Fig. 2 und der Innendruckkurve des aktuellen Produktionszyklus nach Fig. 3 sowie einer Innendrucckurve eines dritten nachfolgenden Produktionszyklus der Spritzgiessanlage nach Fig. 1 mit verändertem dritten Maschinenparameter;
- Fig. 7: eine graphische Darstellung der Referenzkurve nach Fig. 2 und der Innendruckkurve des aktuellen Produktionszyklus nach Fig. 3 sowie einer Innendrucckurve eines vierten nachfolgenden Produktionszyklus der Spritzgiessanlage nach Fig. 1 mit verändertem vierten Maschinenparameter; und
- Fig. 8: eine schematische Darstellung von Teilen der erfinderischen Verfahrensschritte.

### Wege zur Ausführung der Erfindung

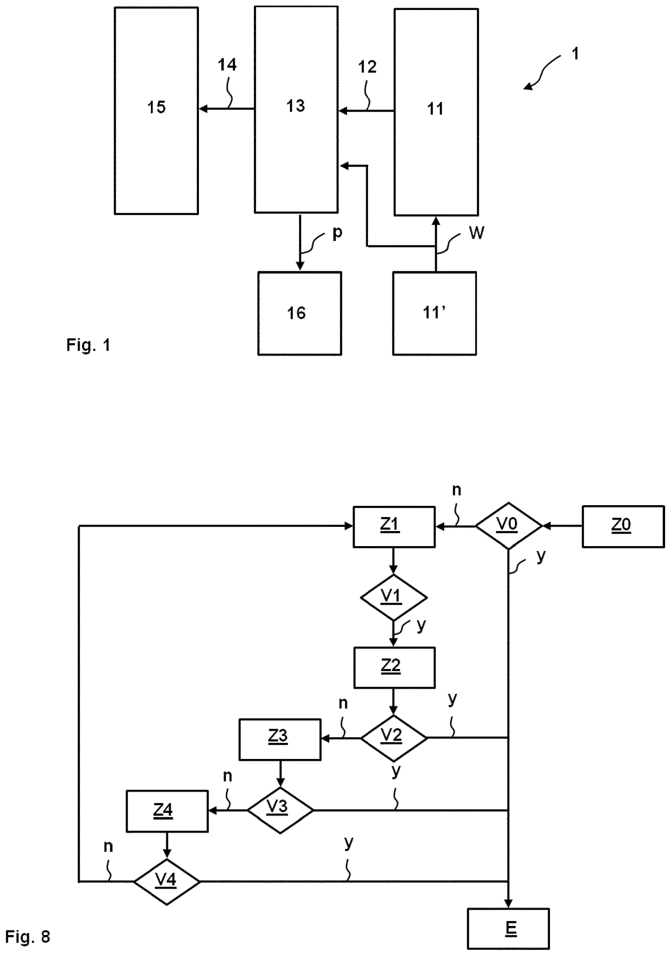

Das erfindungsgemässe Verfahren zum Reproduzieren der Spritzgiessteilequalität beim Spritzgiessen lässt sich auf einer beliebigen handelsüblichen und dem Fachmann bekannten Spritzgiessanlage 1 verwenden. Eine in Fig. 1 schematisch dargestellte Spritzgiessanlage 1 weist eine Einspritzvorrichtung 11 auf, in welcher eine Schmelze 12 verflüssigt wird. Die Schmelze 12 kann aus Kunststoff, Metall, Keramik usw. sein. Die Spritzgiessanlage 1 weist ein Spritzgiesswerkzeug 13 mit einer Kavität auf, in welche die verflüssigte Schmelze 12 von der Einspritzvorrichtung 11 unter Druck eingespritzt wird. Die in die Kavität eingespritzte Schmelze 12 wird in der Kavität zum Erstarren gebracht und kühlt ab. Am Ende des Produktionsprozesses wird ein fertiges Spritzgiessteil 14 aus der Kavität ausgestossen. In der Kavität ist ein Drucksensor angeordnet, welcher einen zeitlichen Verlauf eines Innendruckes p der Kavität erfasst. Der Drucksensor ist beispielsweise ein piezoelektrischer Drucksensor. Die Kavität kann einen Temperatursensor aufweisen, um einen zeitlichen Verlauf einer Werkzeugtemperatur zu erfassen. Der Temperatursensor ist beispielsweise ein Thermoelement.

Die Spritzgiessanlage 1 weist eine Kontrolleinheit 15 auf, welche kontrolliert, ob das produzierte Spritzgiessteil 14 mindestens ein vordefiniertes Qualitätsmerkmal erfüllt. Das vordefinierte Qualitätsmerkmal ist ein Gewicht, eine Masshaltigkeit, eine Grösse, eine Gratbildung, eine Kavitätsfüllung, eine Brandstelle, usw. Wenn das produzierte Spritzgiessteil 14 das vordefinierte Qualitätsmerkmal erfüllt, liegt ein Gutteil vor, wenn das produzierte Spritzgiessteil 14 das Qualitätsmerkmal nicht erfüllt, liegt ein Schlechtteil vor.

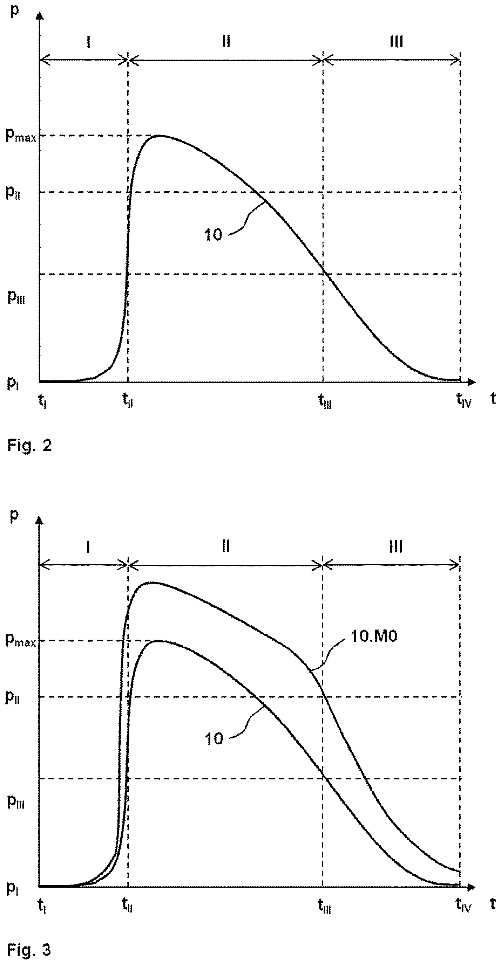

Das Spritzgiesswerkzeug weist eine Auswerteeinheit 16 auf, um den erfassten Innendruck p als Innendruckkurve 10 über einer Zeit t darzustellen. Im Sinne der Erfindung wird auch von einer erfassten Innendruckkurve gesprochen. Dazu weist die Auswerteeinheit 16 mindestens eine Ausgabevorrichtung wie einen Bildschirm, usw. auf, um eine erfasste Innendruckkurve darzustellen. Fig. 2 bis 7 zeigen eine beispielhafte Innendruckkurve 10 für ein Gutteil, welche im Folgenden auch Referenzkurve 10 genannt wird. Die Zeiten t_{I} bis t_{VI} und Innendrücke p_{I} bis p_{III} und pₘₐₓ der Fig. 2 bis 7 gelten für die Referenzkurve 10. Die Referenzkurve 10 ist in einem elektronischen Datenspeicher der Auswerteeinheit 16 speicherbar und aus dem elektronischen Datenspeicher wieder abrufbar und auf der Ausgabevorrichtung darstellbar. Das Spritzgiesswerkzeug 13 kann mehrere Kavitäten haben und für jede Kavität kann eine spezifische Referenzkurve 10 existieren. Bei Kenntnis der vorliegenden Erfindung kann der Fachmann die Auswerteeinheit als integrativer Bestandteil der Spritzgiessanlage realisieren, er kann die Auswerteeinheit und ihre Bestandteile aber auch separat von der Spritzgiessanlage realisieren. So kann die Auswerteeinheit räumlich von der Spritzgiessanlage entfernt sein und über Internet mit der Spritzgiessanlage kommunizieren. Auch kann die Ausgabeeinheit ein Bildschirm einer mobilen Recheneinheit wie ein Laptop, ein Tablet, ein Smartphone, usw. sein.

Spritzgiessen ist ein zyklischer Produktionsprozess, bei dem sich wiederholende Produktionszyklen nacheinander abgewickelt werden. Der Produktionszyklus weist die qualitätsbestimmenden Phasen I bis III auf. Die Phasen I bis III werden anhand der Fig. 2 erläutert. In einer Einspritzphase I wird die verflüssigte Schmelze 12 durch einen Anguss in die Kavität eingespritzt. Die Einspritzphase I beginnt zu einem Zeitpunkt t_{I} mit einem Innendruck p_{I} und endet an einem Zeitpunkt t_{II} mit einem Innendruck p_{II}. Die Kavität wird mit Schmelze 12 gefüllt. Dazu weist die Einspritzvorrichtung 11 eine Steuereinrichtung 11' auf, um das Verflüssigen und Einspritzen der Schmelze 12 in die Kavität zu steuern. Mit der Steuereinrichtung 11' lässt sich als Maschinenparameter M eine Einspritzgeschwindigkeit verändern. Dazu weist die Steuereinrichtung 11' eine Eingabevorrichtung auf, um mindestens einen Maschinenparameter M einzugeben. Je höher die Einspritzgeschwindigkeit ist, desto rascher wird die Kavität mit Schmelze gefüllt. Beim Füllen der Kavität mit Schmelze 12 steigt der Innendruck p in einer kurzen Zeitspanne auf einen maximalen Innendruck pₘₐₓ. Kurz vor Erfassen des maximalen Innendruckes ist die Kavität vollständig mit Schmelze 12 gefüllt und die Einspritzphase I ist beendet. Der Innendruck p_{II} der vollständig mit Schmelze 12 gefüllten Kavität wird auch Fülldruck p_{II} bezeichnet. Der Zeitpunkt t_{II}, an dem die Kavität vollständig mit Schmelze gefüllt ist, wird auch Umschaltzeitpunkt t_{II} genannt.

Zum Umschaltzeitpunkt t_{II} wird die Spritzgiessanlage 1 von der Einspritzgeschwindigkeit als Maschinenparameter M auf einen Nachdruck als Maschinenparameter M umgeschaltet, die Nachdruckphase II beginnt. In der Nachdruckphase II übt die Einspritzvorrichtung 11 am Anguss einen Nachdruck auf die Schmelze 12 in der Kavität aus. Auch wird Schwindung der abkühlenden Schmelze 12 kompensiert, in dem weitere Schmelze 12 in die Kavität fliesst. Dabei wird von der Steuereinrichtung 11' der Innendruck p auf einen Siegelpunktdruck p_{III} erniedrigt. Die Schmelze 12 wird in der Kavität zum Erstarren gebracht und kühlt dabei ab. Die Nachdruckphase II beginnt zum Zeitpunkt t_{II} und endet an einem Zeitpunkt t_{III} mit dem Siegelpunktdruck p_{III}. Mit der Steuereinrichtung 11' lassen sich als Maschinenparameter M die Nachdruckhöhe und eine Nachdruckzeit verändern. Die Nachdruckhöhe beeinflusst eine Höhe des Innendruckes p besonders im Bereich des maximalen Innendruckes pₘₐₓ, wo die Schmelze 12 kurzzeitig komprimiert ist und der Innendruck p grösser als der Fülldruck p_{II} ist. Die Nachdruckzeit beeinflusst die Geschwindigkeit, mit welcher der Innendruck p erniedrigt wird.

Zum Zeitpunkt t_{III} beginnt die Restkühlphase III, die erstarrte Schmelze 12 kühlt weiter ab. Der Zeitpunkt t_{III} wird auch Siegelpunkt t_{III} genannt, zu dem die Schmelze 12 im Bereich des Angusses so weit erstarrt ist, dass keine Schmelze 12 mehr in die Kavität fliessen kann, der Anguss der Kavität ist versiegelt. Das Spritzgiesswerkzeug 13 ist über Kühlmittel kühlbar. Mit der Steuereinrichtung 11' lässt sich als Maschinenparameter M eine Werkzeugtemperatur verändern, die Kavität wird somit in der Nachdruckphase II und in der Restkühlphase III mehr oder weniger stark gekühlt. Die Restkühlphase III endet zum Zeitpunkt t_{IV}, an dem das fertige Spritzgiessteil 14 aus der Kavität ausgestossen wird.

Zum Reproduzieren einer Spritzgiessteilequalität erfolgt ein Vergleich V0 einer Innendruckkurve 10.M0 eines aktuellen Produktionszyklus Z0 mit der Referenzkurve 10. Im Vergleich V0 wird ermittelt, ob die Innendruckkurve 10.M0 des aktuellen Produktionszyklus Z0 mindestens einen vordefinierten Schwellenwert überschreitet. Dieser Vergleich V0 erfolgt unabhängig von der Qualitätskontrolle des produzierten Spritzgiessteiles 14 durch die Kontrolleinheit. Dieser Vergleich V0 erfolgt durch die Auswerteieinheit 16. Dazu wird mindestens ein Auswerteprogramm in einem Prozessor der Auswerteinheit 16 ausgeführt. Ein solcher Vergleich V0 ist hilfreich, um im laufenden zyklischen Produktionsprozess Schwankungen in der Zusammensetzung und Viskosität der Schmelze 12 zu erfassen und auch um im laufenden zyklischen Produktionsprozess sich ändernde Umwelteinflüsse wie Druck und Temperatur der Atmosphäre zu erfassen. Ein solcher Vergleich V0 ist aber auch hilfreich, um einen neuen Produktionsprozess einzurichten, beispielsweise wenn ein zu einem früheren Zeitpunkt auf der Spritzgiessanlage 1 produziertes Spritzgiessteil 14 wieder produziert werden soll, oder wenn auf der Spritzgiessanlage 1 ein neues Spritzgiessteil 14 produziert werden soll, welches einem zu einem früheren Zeitpunkt auf der Spritzgiessanlage 1 produzierten Spritzgiessteil 14 ähnlich ist. Dabei wird angenommen, dass falls die Innendruckkurve 10.M0 des aktuellen Produktionszyklus Z0 den Schwellenwert nicht überschreitet, ein Gutteil produziert wird. Diese Annahme kann mit einer Qualitätskontrolle des im aktuellen Produktionszyklus Z0 produzierten Spritzgiessteiles 14 durch die Kontrolleinheit 16 bestätigt werden.

Fig. 8 zeigt schematisch die Schritte im erfindungsgemässen Verfahren zum Reproduzieren der Spritzgiessteilequalität beim Spritzgiessen auf. Das Verfahren wird mit dem Auswerteprogramm der Auswerteeinheit 16 ausgeführt. In einem ersten Verfahrensschritt wird eine Innendruckkurve 10.M0 eines aktuellen Produktionszyklus Z0 erfasst. Die Maschinenparameter des aktuellen Produktionszyklus Z0 werden aktuelle Maschinenparameter M0 genannt. In einem folgenden Verfahrensschritt erfolgt der Vergleich V0 der Innendruckkurve 10.M0 des aktuellen Produktionszyklus Z0 mit der Referenzkurve 10. In Fig. 3 ist ein beispielhaftes Ergebnis des Vergleiches V0 der Innendruckkurve 10.M0 des aktuellen Produktionszyklus Z0 mit der Referenzkurve 10 dargestellt.

Im Beispiel nach Fig. 3 liegt der Umschaltzeitpunkt der Innendruckkurve 10.M0 des aktuellen Produktionszyklus Z0 zeitlich vor demjenigen der Referenzkurve 10. Als erster Schwellenwert wird ein vordefiniertes Abweichen von vorzugsweise 1% des Umschaltzeitpunktes t_{II} der Referenzkurve 10 verwendet.

Auch ist im Beispiel nach Fig. 3 der maximale Innendruck der Innendruckkurve 10.M0 des aktuellen Produktionszyklus Z0 deutlich höher als derjenige der Referenzkurve 10. Als zweiter Schwellenwert wird ein vordefiniertes Abweichen von vorzugsweise 5% vom maximalen Innendruck pₘₐₓ der Referenzkurve 10 verwendet.

Zudem ist im Beispiel nach Fig. 3 der Innendruck p der Innendruckkurve 10.M0 des aktuellen Produktionszyklus Z0 in der Nachdruckphase II und auch in der Restkühlphase III höher als derjenige der Referenzkurve 10. Als dritter Schwellenwert wird ein vordefiniertes Abweichen von vorzugsweise 2% des Innendruckes p vom Siegelpunktdruck p_{III} der Referenzkurve 10 am Siegelpunkt t_{III} der Referenzkurve 10 verwendet.

Im Beispiel nach Fig. 3 wird als vierter Schwellenwert ein Erreichen des Siegelpunktes verwendet. Wird der Siegelpunkt nicht erreicht, so ist die Schmelze 12 im Bereich des Angusses der Kavität noch nicht erstarrt und auch die Schwindung der abkühlenden Schmelze ist noch nicht beendet. Wenn nun der Nachdruck vor Erreichen des Siegelpunktes abgebaut wird, so erfolgt keine Kompensation der Schwindung der abkühlenden Schmelze mehr, was sich in einem charakteristischen Druckabfall in der Innendruckkurve 10.M0 des aktuellen Produktionszyklus Z0 äussert. Bei Erreichen des Siegelpunktes t_{III} tritt dieser charakteristische Druckabfall nicht auf.

Bei Kenntnis der vorliegenden Erfindung kann der Fachmann weitere Schwellenwerte verwenden. So kann der Fachmann als weiteren Schwellenwert auch ein vordefiniertes Abweichen von einem beliebigen vordefinierten Innendruck p der Referenzkurve 10 in der Nachdruckphase II und/oder in der Restkühlphase III verwenden. Auch kann der Fachmann Schwellenwerte mit grösseren oder kleineren Abweichungen verwenden.

Im Beispiel nach Fig. 3 werden von der Innendrucckurve 10.M0 des aktuellen Produktionszyklus Z0 alle vier Schwellenwerte überschritten. Der Vergleich V0 ist erfolglos, was in Fig. 8 mit einem n gekennzeichnet ist. Ein erfolgreicher Vergleich V0 wird in Fig. 8 mit einem y gekennzeichnet. Bei einem erfolgreichen Vergleich V0 wird mindestens ein Schwellenwert nicht überschritten und es besteht kein Handlungsbedarf und das Verfahren wird im Verfahrensschritt E beendet.

Falls im erfindungsgemässen Verfahren zum Reproduzieren der Spritzgiessteilequalität beim Spritzgiessen die Innendruckkurve 10.M0 des aktuellen Produktionszyklus Z0 einen Schwellenwert überschreitet, erfolgt ein Angleichen einer Innendruckkurve 10.M1 bis 10.M4 eines nachfolgenden Produktionszyklus Z1 bis Z4 an die Referenzkurve 10 durch Verändern eines Maschinenparameters M. Das Angleichen der Innendrucckurve 10.M1 bis 10.M4 eines nachfolgenden Produktionszyklus Z1 bis Z4 an die Referenzkurve 10 durch Verändern eines Maschinenparameters M erfolgt durch das Auswerteprogramm der Auswerteeinheit 16. Ein Darstellen der Innendruckkurven 10, 10.M0 bis 10.M4 erfolgt auf der Ausgabeeinheit der Auswerteeinheit 16.

Dazu wird jeder Phase I bis III des Produktionszyklus mindestens ein Maschinenparameter M1 bis M4 zugeordnet, welcher zugeordnete Maschinenparameter M1 bis M4 den Innendruck p in dieser Phase I bis III des Produktionszyklus stärker als nichtzugeordnete Maschinenparameter M beeinflusst. Der Einspritzphase I wird als erster Maschinenparameter M1 die Einspritzgeschwindigkeit zugeordnet. Der Nachdruckphase II wird als zweiter Maschinenparameter M2 die Nachdruckhöhe zugeordnet. Der Restkühlphase III wird als dritter Maschinenparameter M3 eine Werkzeugtemperatur zugeordnet. Zudem wird der Restkühlphase III als vierter Maschinenparameter M4 die Nachdruckzeit zugeordnet. Das Zuordnen der Maschinenparameter M1 bis M4 zu einer Phase I bis III erfolgt durch das Auswerteprogramm der Auswerteeinheit 16.

Nach Fig. 8 werden die zugeordneten Maschinenparameter M1 bis M4 in mehreren Produktionszyklen Z1 bis Z4 in einer vordefinierten Reihenfolge verändert. Vorzugsweise erfolgt nach jedem der Produktionszyklen Z1 bis Z4 ein Vergleich V1 bis V4, ob eine Innendruckkurve 10.M1 bis 10.M4 eines nachfolgenden Produktionszyklus Z1 bis Z4 einen vordefinierten Schwellenwert überschreitet. Ein erfolgreicher Vergleich V1 bis V4 wird in Fig. 8 mit einem y gekennzeichnet. Ein erfolgloser Vergleich V1 bis V4 wird in Fig. 8 mit einem n gekennzeichnet. Das Verändern der zugeordneten Maschinenparameter M1 bis M4 und das Vergleichen, ob eine Innendruckkurve 10.M1 bis 10.M4 eines nachfolgenden Produktionszyklus Z1 bis Z4 einen vordefinierten Schwellenwert überschreitet, erfolgt durch das Auswerteprogramm der Auswerteeinheit 16.

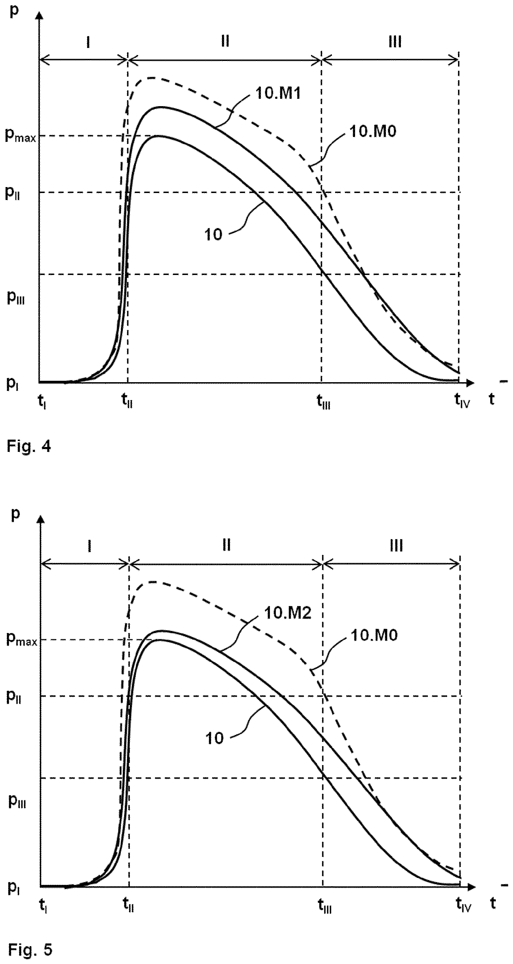

Erfindungsgemäss wird pro Produktionszyklus Z0 bis Z4 genau ein zugeordneter Maschinenparameter M1 bis M4 verändert. Die vordefinierte Reihenfolge lautet: erster Maschinenparameter M1, zweiter Maschinenparameter M2, dritter Maschinenparameter M3 und vierter Maschinenparameter M4. Die dabei in jedem Produktionszyklus Z0 bis Z4 erfassten Innendruckkurven 10.M0 bis 10.M4 sind in den Fig. 4 bis 7 dargestellt. Zur Veranschaulichung der durch einen veränderten zugeordneten Maschinenparameter M1 bis M4 hervorgerufenen Wirkung auf die Innendruckkurve 10.M1 bis 10.M4 eines nachfolgenden Produktionszyklus Z1 bis Z4 sind in Fig. 4 bis 7 auch die Innendrucckurve 10.M0 des aktuellen Produktionszyklus Z0 sowie die Referenzkurve 10 eingetragen.

Die Spritzgiessanlage 1 wird von Bedienpersonal bedient. Das Bedienpersonal kann mit der Steuereinrichtung 11' einen Wert eines Maschinenparameters M einstellen. Das Bedienpersonal kann mit der Steuereinrichtung 11' die Maschinenparameter M verändern. Auch kann das Bedienpersonal an der Kontrolleinheit 15 das vordefinierte Qualitätsmerkmal kontrollieren. Auf der Ausgabevorrichtung wird dem Bedienpersonal eine erfasste Innendruckkurve oder eine Referenzkurve 10 dargestellt. Auf der Ausgabevorrichtung wird dem Bedienpersonal ein Ergebnis eines Vergleiches V0 bis V4 dargestellt. Auf der Ausgabevorrichtung wird dem Bedienpersonal der mindestens eine einer Phase I bis III zugeordnete Maschinenparameter M1 bis M4 dargestellt. Auch wird dem Bedienpersonal auf der Ausgabevorrichtung ein Wert eines zu verändernden zugeordneter Maschinenparameter M1 bis M4 dargestellt. Und dem Bedienpersonal werden auf der Ausgabevorrichtung Werte der zu verändernden zugeordneter Maschinenparameter M1 bis M4 in einer vordefinierten Reihenfolge dargestellt. Das Bedienpersonal ist somit ein Bindeglied zwischen der Auswerteeinheit 16 und der Steuereinrichtung 11'. Das Bedienpersonal kann mit der Steuereinrichtung 11' Werte der zu verändernden zugeordneter Maschinenparameter M1 bis M4 in der vordefinierten Reihenfolge eingeben. Bei Kenntnis der vorliegenden Erfindung kann der Fachmann den zu verändernden zugeordneten Maschinenparameters natürlich auch automatisiert verändern, in dem ein Wert eines zu verändernden zugeordneten Maschinenparameters von der Auswerteeinheit 16 an der Steuereinrichtung 11' eingestellt wird. Beispielsweise sind dazu die Auswerteeinheit 16 und die Steuereinrichtung 11' über eine elektronische Schnittstelle miteinander verbunden.

In einem ersten nachfolgenden Produktionszyklus Z1 wird die Einspritzgeschwindigkeit der Einspritzphase I verändert. Ein Wert der zu verändernden Einspritzgeschwindigkeit wird auf der Ausgabevorrichtung dargestellt. Falls der Umschaltzeitpunkt der Innendruckkurve 10.M0 des aktuellen Produktionszyklus Z0 zeitlich vor demjenigen der Referenzkurve 10 liegt, wird die Einspritzgeschwindigkeit verändert, in dem sie erniedrigt wird. Das ist im Beispiel nach Fig. 3 der Fall. Beispielsweise wird im ersten nachfolgenden Produktionszyklus Z1 die Einspritzgeschwindigkeit des aktuellen Produktionszyklus Z0 um 2% erniedrigt.

In einem ersten Vergleich V1 wird ermittelt, ob die mit der erniedrigten Einspritzgeschwindigkeit erfasste Innendruckkurve 10.M1 des ersten nachfolgenden Produktionszyklus Z1 einen ersten Schwellenwert überschreitet. Ein beispielhaftes Ergebnis des ersten Vergleiches V1 ist in Fig. 4 dargestellt. Als erster Schwellenwert wird ein vordefiniertes Abweichen vom Umschaltzeitpunkt t_{II} der Referenzkurve 10 verwendet. Im Beispiel nach Fig. 4 bewirkt das Erniedrigen der Einspritzgeschwindigkeit, dass der Umschaltzeitpunkt der Innendruckkurve 10.M1 des ersten nachfolgenden Produktionszyklus Z1 zeitlich nach dem Umschaltzeitpunkt der Innendruckkurve 10.M0 des aktuellen Produktionszyklus Z0 liegt. Der Umschaltzeitpunkt der Innendruckkurve 10.M1 des ersten nachfolgenden Produktionszyklus Z1 liegt jedoch zeitlich vor dem Umschaltzeitpunkt t_{II} der Referenzkurve 10. Der Umschaltzeitpunkt der Innendruckkurve 10.M1 des ersten nachfolgenden Produktionszyklus Z1 weicht mehr vom Umschaltzeitpunkt t_{II} der Referenzkurve 10 ab, als vordefiniert ist. Das heisst, dass der erste Vergleich V1 erfolglos ist.

Falls der Umschaltzeitpunkt der Innendruckkurve 10.M0 des aktuellen Produktionszyklus Z0 zeitlich nach demjenigen der Referenzkurve 10 liegt, wird die Einspritzgeschwindigkeit verändert, in dem sie erhöht wird. Beispielsweise ist die Einspritzgeschwindigkeit des aktuellen Produktionszyklus Z0 um 2% höher als diejenige des aktuellen Produktionszyklus Z0.

In einem ersten Vergleich V1 wird ermittelt, ob die mit der erhöhten Einspritzgeschwindigkeit erfasste Innendruckkurve 10.M1 des ersten nachfolgenden Produktionszyklus Z1 den ersten Schwellenwert überschreitet. Bei einem erfolgreichen ersten Vergleich V1 kann das Verfahren im Verfahrensschritt E beendet werden.

In einem zweiten nachfolgenden Produktionszyklus Z2 wird die Nachdruckhöhe der Nachdruckphase II verändert. Ein Wert der zu verändernden Nachdruckhöhe wird auf der Ausgabevorrichtung dargestellt. Falls ein maximaler Innendruck der Innendruckkurve 10.M1 des ersten nachfolgenden Produktionszyklus Z1 höher als derjenige der Referenzkurve 10 ist, wird die Nachdruckhöhe verändert wird, in dem sie erniedrigt wird. Das ist im Beispiel nach Fig. 4 der Fall. Beispielsweise wird die Nachdruckhöhe des zweiten nachfolgenden Produktionszyklus Z2 verglichen mit dem aktuellen Produktionszyklus Z0 um 10% erniedrigt.

In einem zweiten Vergleich V2 wird ermittelt, ob die mit der erniedrigten Nachdruckhöhe erfasste Innendrucckurve 10.M2 des zweiten nachfolgenden Produktionszyklus Z2 einen zweiten Schwellenwert überschreitet. Ein beispielhaftes Ergebnis des zweiten Vergleiches V2 ist in Fig. 5 dargestellt. Als zweiter Schwellenwert wird ein vordefiniertes Abweichen vom maximalen Innendruck pₘₐₓ der Referenzkurve 10 verwendet. Im Beispiel nach Fig. 5 bewirkt das Erniedrigen der Nachdruckhöhe, dass die Innendruckkurve 10.M2 des zweiten nachfolgenden Produktionszyklus Z2 einen deutlich niedrigen maximalen Innendruck als die Innendruckkurve 10.M0 des aktuellen Produktionszyklus Z0 aufweist. Der maximale Innendruck der Innendruckkurve 10.M2 des zweiten nachfolgenden Produktionszyklus Z2 weicht weniger vom maximalen Innendruck der Referenzkurve pₘₐₓ ab, als vordefiniert ist. Das heisst, dass der zweite Vergleich V2 erfolgreich ist. Bei einem erfolgreichen zweiten Vergleich V2 kann das Verfahren im Verfahrensschritt E beendet werden.

Falls ein maximaler Innendruck der Innendruckkurve 10.M1 des ersten nachfolgenden Produktionszyklus Z1 niedriger als derjenige der Referenzkurve 10 ist, wird die Nachdruckhöhe verändert, in dem sie erhöht wird. Beispielsweise wird die Nachdruckhöhe des zweiten nachfolgenden Produktionszyklus Z2 verglichen mit dem aktuellen Produktionszyklus Z0 um 5% erhöht.

In einem zweiten Vergleich V2 wird ermittelt, ob die mit der erhöhten Nachdruckhöhe erfasste Innendruckkurve 10.M2 des zweiten nachfolgenden Produktionszyklus Z2 den zweiten Schwellenwert überschreitet.

In einem dritten nachfolgenden Produktionszyklus Z3 wird die Werkzeugtemperatur der Nachdruckphase II und der Restkühlphase III verändert. Ein Wert der zu verändernden Werkzeugtemperatur wird auf der Ausgabevorrichtung dargestellt. Falls der Innendruck p der Innendruckkurve 10.M2 des zweiten nachfolgenden Produktionszyklus Z2 höher ist als ein vordefinierter Innendruck p der Referenzkurve 10 in der Nachdruckphase II und in der Restkühlphase III, wird die Werkzeugtemperatur verändert, in dem sie erniedrigt wird. Das ist im Beispiel nach Fig. 5 der Fall. Beispielsweise wird die Werkzeugtemperatur des dritten nachfolgenden Produktionszyklus Z3 verglichen mit dem aktuellen Produktionszyklus Z0 um 2% erniedrigt.

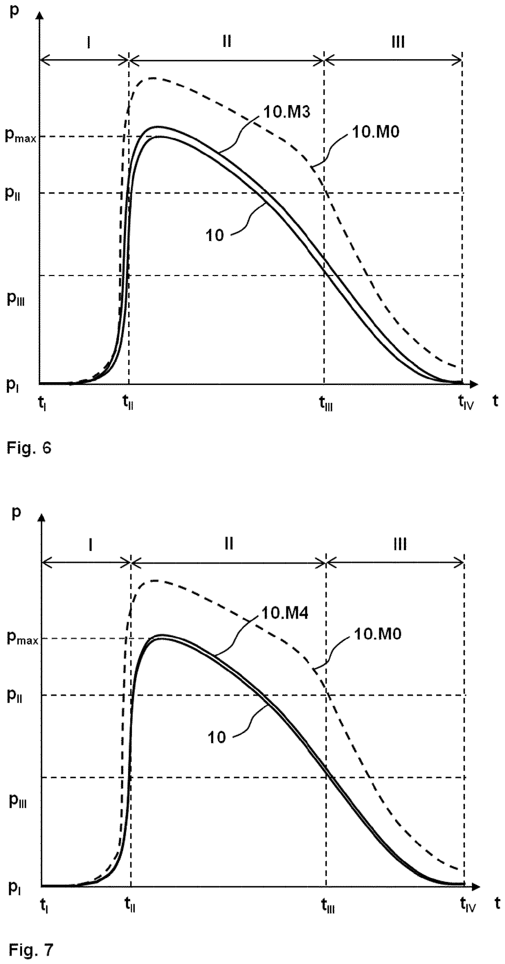

In einem dritten Vergleich V3 wird ermittelt, ob die mit der erniedrigten Werkzeugtemperatur erfasste Innendruckkurve 10.M3 des dritten nachfolgenden Produktionszyklus Z3 einen dritten Schwellenwert überschreitet. Ein beispielhaftes Ergebnis des dritten Vergleiches V3 ist in Fig. 6 dargestellt. Als dritter Schwellenwert wird ein vordefiniertes Abweichen von einem vordefinierten Innendruck p der Referenzkurve 10 in der Nachdruckphase II und/oder in der Restkühlphase III verwendet. Vorzugsweise wird als dritter Schwellenwert ein vordefiniertes Abweichen des Innendruckes p vom Siegelpunktdruck p_{III} der Referenzkurve 10 am Siegelpunkt t_{III} der Referenzkurve 10 verwendet. Im Beispiel nach Fig. 6 bewirkt das Erniedrigen der Werkzeugtemperatur, dass die Innendrucckurve 10.M3 des dritten nachfolgenden Produktionszyklus Z3 einen deutlich niedrigen Innendruck p als die Innendruckkurve 10.M0 des aktuellen Produktionszyklus Z0 aufweist. Auch weicht der Innendruck p der Innendruckkurve 10.M3 weniger vom Siegelpunktdruck p_{III} der Referenzkurve 10 am Siegelpunkt t_{III} der Referenzkurve 10 ab, als vordefiniert ist. Das heisst, dass der dritte Vergleich V3 erfolgreich ist. Bei einem erfolgreichen dritten Vergleich V3 kann das im Verfahrensschritt E beendet werden.

Falls der Innendruck p der Innendruckkurve 10.M2 des zweiten nachfolgenden Produktionszyklus Z2 am Siegelpunkt t_{III} niedriger ist als der Siegelpunktdruck p_{III} der Referenzkurve 10, wird die Werkzeugtemperatur verändert, in dem sie erhöht wird. Beispielsweise wird die Werkzeugtemperatur des dritten nachfolgenden Produktionszyklus Z3 verglichen mit dem aktuellen Produktionszyklus Z0 um 2% erhöht.

In einem dritten Vergleich V3 wird ermittelt, ob die mit der erhöhten Werkzeugtemperatur erfasste Innendrucckurve 10.M3 des dritten nachfolgenden Produktionszyklus Z3 den dritten Schwellenwert überschreitet.

In einem vierten nachfolgenden Produktionszyklus Z4 wird die Nachdruckzeit der Restkühlphase III verändert. Ein Wert der zu verändernden Nachdruckzeit wird auf der Ausgabevorrichtung dargestellt. Die Nachdruckzeit wird verändert, in dem sie verlängert oder verkürzt wird. Beispielsweise wird im vierten nachfolgenden Produktionszyklus Z4 die Nachdruckzeit des dritten nachfolgenden Produktionszyklus Z3 um 2% verkürzt.

Fig. 7 zeigt die erfasste Innendruckkurve 10.M1 des vierten nachfolgenden Produktionszyklus Z1. Verglichen mit der Innendruckkurve 10.M3 des dritten nachfolgenden Produktionszyklus Z3 führt die verkürzte Nachdruckzeit zu einem schnelleren Abfall des Innendruckes p der Innendruckkurve 10.M4 des vierten nachfolgenden Produktionszyklus Z4.

In einem vierten Vergleich V4 wird ermittelt, ob die mit der verlängerten Nachdruckzeit erfasste Innendrucckurve 10.M4 des vierten nachfolgenden Produktionszyklus Z4 einen vierten Schwellenwert überschreitet. Ein beispielhaftes Ergebnis des vierten Vergleiches V4 ist in Fig. 7 dargestellt. Als vierter Schwellenwert wird ein Erreichen des Siegelpunktes verwendet. Denn sobald der Siegelpunkt erreicht ist und die Schmelze im Bereich des Angusses erstarrt ist, kann zur Kompensation der abkühlenden Schwindung keine Schmelze mehr in die Kavität fliessen und für eine möglichst kurze Zykluszeit wird auch die Nachdruckzeit möglichst kurz gehalten. Im Beispiel nach Fig. 7 bewirkt das Verkürzung der Nachdruckzeit, dass die Innendruckkurve 10.M4 des vierten nachfolgenden Produktionszyklus Z4 am Siegelpunkt keinen charakteristischen Druckabfall mehr aufweist. Das heisst, dass der vierte Vergleich V4 erfolgreich ist und dass im vierten nachfolgenden Produktionszyklus Z4 der Siegelpunkt erreicht wird.

Falls der vierte Vergleich V4 erfolglos ist und mit der verlängerten Nachdruckzeit im vierten nachfolgenden Produktionszyklus Z4 der Siegelpunkt nicht erreicht wird, wird in einem weiteren ersten nachfolgenden Produktionszyklus Z1 der erste Maschinenparameter M1 der vordefinierten Reihenfolge verändert.

Die Einspritzgeschwindigkeit wird ein weiteres Mal verändert, in dem sie entweder noch mehr erniedrigt oder noch mehr erhöht wird, als im ersten nachfolgenden Produktionszyklus Z1. Beispielsweise ist die Einspritzgeschwindigkeit des ersten nachfolgenden Produktionszyklus Z1 verglichen mit dem aktuellen Produktionszyklus Z0 nun um 3% erniedrigt. Eine solche Iteration mit immer mehr erniedrigten oder erhöhten Einspritzgeschwindigkeiten bei erfolglosem vierten Vergleich V4 lässt sich mehrmals durchführen. Vorzugsweise wird die Einspritzgeschwindigkeit bis zu fünf Mal immer mehr erniedrigt oder erhöht. Falls der vierte Vergleich V4 auch nach fünfmalig immer mehr erniedrigter oder erhöhter Einspritzgeschwindigkeit erfolglos ist, wird das Verfahren beendet.

### Bezugszeichenliste

- 1: Spritzgiessanlage
- 10: Referenzkurve
- 10.M0: aktuelle Innendruckkurve
- 10.M1 bis 10.M4: Innendruckkurve mit verändertem zugeordnetem Maschinenparameter
- 11: Einspritzvorrichtung
- 11': Steuereinrichtung
- 12: Schmelze
- 13: Spritzgiesswerkzeug
- 14: Spritzgiessteil
- 15: Kontrolleinheit
- 16: Auswerteeinheit
- E: Ende des Angleichens der Innendruckkurve
- I: Einspritzphase
- II: Nachdruckphase
- III: Restkühlphase
- n: erfolgloser Vergleich
- p: Innendruck
- p_{I}: Innendruck zu Beginn der Einspritzphase
- p_{II}: Fülldruck
- p_{III}: Siegelpunktdruck
- pₘₐₓ: maximaler Innendruck
- t: Zeit
- t_{I}: Beginn der Einspritzphase
- t_{II}: Umschaltzeitpunkt
- t_{III}: Siegelpunkt
- t_{IV}: Ende der Restkühlphase
- V0 bis V4: Vergleich der Innendruckkurven
- M: Maschinenparameter
- M0: aktueller Maschinenparameter
- M1 bis M4: zugeordneter Maschinenparameter
- y: erfolgreicher Vergleich
- Z0 bis Z4: Produktionszyklen

## Patentansprüche

1. Verfahren zum Reproduzieren einer Spritzgiessteilequalität beim Spritzgiessen; wobei mit einem Spritzgiesswerkzeug (13) ein Spritzgiessteil (14) in einem Produktionszyklus (Z0 bis Z4) mit mehreren Phasen (I bis III) produziert wird, in einer Einspritzphase (I) wird eine Schmelze (12) in eine Kavität des Spritzgiesswerkzeuges (13) eingespritzt, in einer Nachdruckphase (II) wird die Schmelze (12) in der Kavität zum Erstarren gebracht und an einem Ende einer Restkühlphase (III) wird die weiter abgekühlte Schmelze (12) als Spritzgiessteil (14) aus der Kavität ausgestossen; wobei ein zeitlicher Verlauf eines Innendruckes (p) der Kavität erfasst wird und als Innendruckkurve (10, 10.M0 bis 10.M4) dargestellt wird; wobei mindestens eine Innendruckkurve eines Produktionszyklus, in dem ein produziertes Spritzgiessteil (14) mindestens ein vordefiniertes Qualitätsmerkmal erfüllt, als Referenzkurve (10) verwendet wird; wobei in einem Vergleich (V0) ermittelt wird, ob eine Innendruckkurve (10.M0) eines aktuellen Produktionszyklus (Z0) mindestens einen vordefinierten Schwellenwert überschreitet; und falls die Innendruckkurve (10.M0) des aktuellen Produktionszyklus (Z0) den Schwellenwert überschreitet, mindestens ein aktueller Maschinenparameter (M0) verändert wird, um eine Innendruckkurve (10M1 bis 10.M4) eines nachfolgenden Produktionszyklus (Z1 bis Z4) an die Referenzkurve (10) anzugleichen; **dadurch gekennzeichnet, dass** jeder Phase (I bis III) des Produktionszyklus mindestens ein Maschinenparameter (Ml bis M4) zugeordnet wird, welcher zugeordnete Maschinenparameter (Ml bis M4) den Innendruck (p) in dieser Phase (I bis III) des Produktionszyklus stärker als nichtzugeordnete Maschinenparameter beeinflusst; und dass die zugeordneten Maschinenparameter (Ml bis M4) in mehreren Produktionszyklen (Z1 bis Z4) in einer vordefinierten Reihenfolge verändert werden, wobei pro Produktionszyklus (Z0 bis Z4) genau ein zugeordneter Maschinenparameter (Ml bis M4) verändert wird.

2. Verfahren nach Anspruch 1, **dadurch gekennzeichnet, dass** als erster Maschinenparameter (M1) der vordefinierten Reihenfolge eine Einspritzgeschwindigkeit der Einspritzphase (I) zugeordnet wird; dass die Einspritzgeschwindigkeit in einem ersten nachfolgenden Produktionszyklus (Z1) verändert wird; und dass als erster Schwellenwert ein vordefiniertes Abweichen vom Umschaltzeitpunkt verwendet wird.

3. Verfahren nach Anspruch 2, **dadurch gekennzeichnet, dass** falls ein Umschaltzeitpunkt der Innendruckkurve (10.M0) des aktuellen Produktionszyklus (Z0) zeitlich vor demjenigen der Referenzkurve (10) liegt, die Einspritzgeschwindigkeit verändert wird, in dem sie erniedrigt wird; und dass in einem ersten Vergleich (V1) ermittelt wird, ob die mit der erniedrigten Einspritzgeschwindigkeit erfasste Innendruckkurve (10.M1) des ersten nachfolgenden Produktionszyklus (Z1) den ersten Schwellenwert überschreitet.

4. Verfahren nach Anspruch 2, **dadurch gekennzeichnet, dass** falls ein Umschaltzeitpunkt der Innendruckkurve (10.M0) des aktuellen Produktionszyklus (Z0) zeitlich nach demjenigen der Referenzkurve (10) liegt, die Einspritzgeschwindigkeit verändert wird, in dem sie erhöht wird; und dass in einem ersten Vergleich (V1) ermittelt wird, ob die mit der erhöhten Einspritzgeschwindigkeit erfasste Innendrucckurve (10.M1) des ersten nachfolgenden Produktionszyklus (Z1) den ersten Schwellenwert überschreitet.

5. Verfahren nach einem der Ansprüche 1 bis 4, **dadurch gekennzeichnet, dass** als zweiter Maschinenparameter (M2) der vordefinierten Reihenfolge eine Nachdruckhöhe der Nachdruckphase (II) zugeordnet wird; dass die Nachdruckhöhe in einem zweiten nachfolgenden Produktionszyklus (Z2) verändert wird; und dass als zweiter Schwellenwert ein vordefiniertes Abweichen vom maximalen Innendruck verwendet wird.

6. Verfahren nach Anspruch 5, **dadurch gekennzeichnet, dass** falls ein maximaler Innendruck der Innendruckkurve (10.M1) des ersten nachfolgenden Produktionszyklus (Z1) höher als derjenige der Referenzkurve (10) ist, die Nachdruckhöhe verändert wird, in dem sie erniedrigt wird; und dass in einem zweiten Vergleich (V2) ermittelt wird, ob die mit der erniedrigten Nachdruckhöhe erfasste Innendruckkurve (10.M2) des zweiten nachfolgenden Produktionszyklus (Z2) den zweiten Schwellenwert überschreitet.

7. Verfahren nach Anspruch 5, **dadurch gekennzeichnet, dass** falls ein maximaler Innendruck der Innendruckkurve (10.M1) des ersten nachfolgenden Produktionszyklus (Z1) niedriger als derjenige der Referenzkurve (10) ist, die Nachdruckhöhe verändert wird, in dem sie erhöht wird; und dass in einem zweiten Vergleich (V2) ermittelt wird, ob die mit der erhöhten Nachdruckhöhe erfasste Innendruckkurve (10.M2) des zweiten nachfolgenden Produktionszyklus (Z2) den zweiten Schwellenwert überschreitet.

8. Verfahren nach einem der Ansprüche 1 bis 7, **dadurch gekennzeichnet, dass** als dritter Maschinenparameter (M3) der vordefinierten Reihenfolge eine Werkzeugtemperatur der Nachdruckphase (II) und der Restkühlphase (III) zugeordnet wird; dass in einem dritten nachfolgenden Produktionszyklus (Z3) die Werkzeugtemperatur verändert wird; und dass als dritter Schwellenwert ein vordefiniertes Abweichen von einem vordefinierten Innendruck (p) der Referenzkurve (10) in der Nachdruckphase (II) und der Restkühlphase (III verwendet wird.

9. Verfahren nach Anspruch 8, **dadurch gekennzeichnet, dass** falls ein Innendruck (p) der Innendruckkurve (10.M2) des zweiten nachfolgenden Produktionszyklus (Z2) am Siegelpunkt (t_{III}) der Referenzkurve (10) höher ist als der Siegelpunktdruck (p_{III}) der Referenzkurve (10) ist, die Werkzeugtemperatur verändert wird, in dem sie erniedrigt wird; und dass in einem dritten Vergleich (V3) ermittelt wird, ob die mit der erniedrigten Werkzeugtemperatur erfasste Innendruckkurve (10.M3) des dritten nachfolgenden Produktionszyklus (Z3) den dritten Schwellenwert überschreitet.

10. Verfahren nach Anspruch 8, **dadurch gekennzeichnet, dass** falls ein Innendruck (p) der Innendruckkurve (10.M3) des zweiten nachfolgenden Produktionszyklus (Z2) am Siegelpunkt (t_{III}) tiefer ist als der Siegelpunktdruck (p_{III}) der Referenzkurve (10), die Werkzeugtemperatur verändert wird, in dem sie erhöht wird; und dass in einem dritten Vergleich (V3) ermittelt wird, ob die mit der erhöhten Werkzeugtemperatur erfasste Innendruckkurve (10.M4) des dritten nachfolgenden Produktionszyklus (Z3) den dritten Schwellenwert überschreitet.

11. Verfahren nach einem der Ansprüche 1 bis 10, **dadurch gekennzeichnet, dass** als vierter Maschinenparameter (M4) der vordefinierten Reihenfolge eine Nachdruckzeit der Restkühlphase (III) zugeordnet wird; dass die Nachdruckzeit in einem vierten nachfolgenden Produktionszyklus (Z4) verändert wird; und dass als vierter Schwellenwert ein Erreichen eines Siegelpunktes verwendet wird.

12. Verfahren nach Anspruch 11, **dadurch gekennzeichnet, dass** die Nachdruckzeit verändert wird in dem sie verlängert wird; und dass in einem vierten Vergleich (V4) ermittelt wird, ob eine mit der verlängerten Nachdruckzeit erfasste Innendruckkurve (10.M4) des vierten nachfolgenden Produktionszyklus (Z4) den vierten Schwellenwert überschreitet.

13. Verfahren nach Anspruch 12, **dadurch gekennzeichnet, dass** falls der vierte Vergleich (V4) erfolgreich ist und die mit der verlängerten Nachdruckzeit erfasste Innendruckkurve (10.M4) des vierten nachfolgenden Produktionszyklus (Z4) den vierten Schwellenwert nicht überschreitet, das Angleichen der Innendruckkurve (10.M1 bis 10.M4) des nachfolgenden Produktionszyklus (Z1 bis Z4) mit der Referenzkurve (10) beendet ist; und dass falls der vierte Vergleich (V4) erfolglos ist und die mit der verlängerten Nachdruckzeit erfasste Innendruckkurve (10.M4) des vierten nachfolgenden Produktionszyklus (Z4) den vierten Schwellenwert überschreitet, in einem weiteren ersten nachfolgenden Produktionszyklus (Z1) der erster Maschinenparameter (M1) der vordefinierten Reihenfolge verändert wird.

14. Spritzgiessanlage (1) zum Durchführen des Verfahrens nach einem der Ansprüche 1 bis 13, **dadurch gekennzeichnet, dass** mindestens ein aktueller Maschinenparameter (M0) eines aktuellen Produktionszyklus (Z0) über eine Eingabeeinheit der Spritzgiessanlage (1) eingebbar ist; dass die Spritzgiessanlage (1) eine Auswerteeinheit (16) aufweist, welche einen elektronischen Datenspeicher, eine Ausgabeeinheit und einen Prozessor aufweist; dass die Referenzkurve (10) im elektronischen Datenspeicher speicherbar ist; dass ein Auswerteprogramm in den Prozessor ladbar ist, welches Auswerteprogramm die Innendruckkurve (10.M1 bis 10.M4) eines nachfolgenden Produktionszyklus (Z1 bis Z4) an die Referenzkurve (10) durch Verändern eines zugeordneten Maschinenparameters (Ml bis M4) in einer vordefinierten Reihenfolge angleicht; und dass Innendruckkurven (10, 10.M0 bis 10.M4) auf der Ausgabeeinheit darstellbar sind.

## Claims

1. A method for reproducing an injection molded part quality in injection molding in which an injection molded part (14) is produced using an injection mold (13) in a production cycle (Z0 to Z4) that comprises a plurality of phases (I to III), a melt (12) is injected into a cavity of the injection mold (13) in an injection phase (I), the melt (12) is solidified in the cavity in a holding pressure phase (II), and at an end of a residual cooling phase (III) the melt (12) that has continued to cool down is ejected from the cavity as the injection molded part (14); wherein a variation of an internal pressure (p) of the cavity with time is detected and represented in the form of the internal pressure graph (10, 10.M0 to 10.M4); at least one internal pressure graph of a production cycle in which an injection molded part (14) produced meets at least one predefined quality characteristic being used as the reference graph (10); wherein a comparison (V0) determines whether an internal pressure graph (10.M0) of a current production cycle (Z0) exceeds at least one predefined threshold value; and if the internal pressure graph (10.M0) of the current production cycle (Z0) exceeds the threshold value, at least one current machine parameter (M0) is changed to adapt an internal pressure graph (10M1 to 10.M4) of a subsequent production cycle (Z1 to Z4) to the reference graph (10); **characterized in that** at least one machine parameter (M1 to M4) is assigned to each phase (I to III) of the production cycle, wherein said assigned machine parameter (M1 to M4) has a higher impact on the internal pressure (p) **in that** phase (I to III) of the production cycle than non-assigned machine parameters; and **in that** said assigned machine parameters (M1 to M4) are changed in a plurality of production cycles (Z1 to Z4) in a predefined order wherein exactly one assigned machine parameter (M1 to M4) is changed per production cycle (Z0 to Z4).

2. The method according to claim 1, **characterized in that** as the first machine parameter (M1) of the predefined order an injection speed is assigned to the injection phase (I); the injection speed is changed in a first subsequent production cycle (Z1); and a predefined deviation from the switchover point is used as the first threshold value.

3. The method according to claim 2, **characterized in that** if a switchover point of the internal pressure graph (10.M0) of the current production cycle (Z0) is earlier than that of the reference graph (10) the injection speed is changed by reducing it; and a first comparison (V1) determines whether the internal pressure graph (10.M1) of the first subsequent production cycle (Z1) detected with the reduced injection speed exceeds the first threshold value.

4. The method according to claim 2, **characterized in that** if a switchover point of the internal pressure graph (10.M0) of the current production cycle (Z0) occurs later than that of the reference graph (10) the injection speed is changed by increasing it; and a first comparison (V1) determines whether the internal pressure graph (10.M1) of the first subsequent production cycle (Z1) detected with the increased injection speed exceeds the first threshold value.

5. The method according to any of claims 1 to 4, **characterized in that** as the second machine parameter (M2) of the predefined order a holding pressure level is assigned to the holding pressure phase (II); the holding pressure level is changed in a second subsequent production cycle (Z2); and a predefined deviation from the maximum internal pressure is used as the second threshold value.

6. The method according to claim 5, **characterized in that** if a maximum internal pressure of the internal pressure graph (10.M1) of the first subsequent production cycle (Z1) is higher than that of the reference graph (10) the holding pressure level is changed by reducing it; and a second comparison (V2) determines whether the internal pressure graph (10.M2) of the second subsequent production cycle (Z2) detected with the decreased holding pressure level exceeds the second threshold value.

7. The method according to claim 5, **characterized in that** if a maximum internal pressure of the internal pressure graph (10.M1) of the first subsequent production cycle (Z1) is lower than that of the reference graph (10), the holding pressure level is changed by increasing it; and a second comparison (V2) determines whether the internal pressure graph (10.M2) of the second subsequent production cycle (Z2) detected with the increased holding pressure level exceeds the second threshold value.

8. The method according to any of claims 1 to 7, **characterized in that** as the third machine parameter (M3) of the predefined order a tool temperature is assigned to the holding pressure phase (II) and the residual cooling phase (III); the tool temperature is changed in a third subsequent production cycle (Z3); and a predefined deviation from a predefined internal pressure (p) of the reference graph (10) in the holding pressure phase (II) and the residual cooling phase (III) is used as the third threshold value.

9. The method according to claim 8, **characterized in that** if an internal pressure (p) of the internal pressure graph (10.M2) of the second subsequent production cycle (Z2) at the sealing point (t_{III}) of the reference graph (10) is higher than the sealing point pressure (p_{III}) of the reference graph (10) the tool temperature is changed by decreasing it; and a third comparison (V3) determines whether the internal pressure graph (10.M3) of the third subsequent production cycle (Z3) detected with the decreased tool temperature exceeds the third threshold value.

10. The method according to claim 8, **characterized in that** if an internal pressure (p) of the internal pressure graph (10.M3) of the second subsequent production cycle (Z2) at the sealing point (t_{III}) is lower than the sealing point pressure (p_{III}) of the reference graph (10) the tool temperature is changed by increasing it; and a third comparison (V3) determines whether the internal pressure graph (10.M4) of the third subsequent production cycle (Z3) detected with the increased tool temperature exceeds the third threshold value.

11. The method according to any of claims 1 to 10, **characterized in that** as the fourth machine parameter (M4) of the predefined order a holding pressure time is assigned to the residual cooling phase (III); the holding pressure time is changed in a fourth subsequent production cycle (Z4); and reaching a sealing point is used as the fourth threshold value.

12. The method according to claim 11, **characterized in that** the holding pressure time is changed by increasing it; and a fourth comparison (V4) determines whether an internal pressure graph (10.M4) of the fourth subsequent production cycle (Z4) detected with the increased holding pressure time exceeds the fourth threshold value.

13. The method according to claim 12, **characterized in that** if the fourth comparison (V4) is successful and the internal pressure graph (10.M4) of the fourth subsequent production cycle (Z4) detected with the increased holding pressure time does not exceed the fourth threshold value, adjusting of the internal pressure graph (10.M1 to 10.M4) of the subsequent production cycle (Z1 to Z4) to the reference graph (10) is completed; and if the fourth comparison (V4) is unsuccessful and the internal pressure graph (10.M4) of the fourth subsequent production cycle (Z4) detected with the increased holding pressure time exceeds the fourth threshold value, the first machine parameter (M1) of the predefined order is changed in a further first subsequent production cycle (Z1).

14. An injection molding unit (1) for performing the method according to any of claims 1 to 13, **characterized in that** at least one current machine parameter (M0) of a current production cycle (Z0) can be entered via an input unit of the injection molding unit (1); the injection molding unit (1) comprises an evaluation unit (16) which comprises an electronic data memory, an output unit, and a processor; the reference graph (10) can be stored in the electronic data memory; an evaluation program can be loaded in the processor, wherein said evaluation program adjusts the internal pressure graph (10.M1 to 10.M4) of a subsequent production cycle (Z1 to Z4) to the reference graph (10) by changing one assigned machine parameter (M1 to M4) in a predefined order; and internal pressure graphs (10, 10.M0 to 10.M4) are displayed on the output unit.

## Revendications

1. Procédé pour reproduire une qualité de pièce moulée par injection en moulage par injection; dans lequel on produit une pièce moulée par injection (14) à l'aide d'un moule d'injection (13) dans un cycle de production (Z0 à Z4) comprenant une pluralité de phases (I à III), dans lequel on injecte, dans une phase d'injection (I), une masse fondue (12) dans une cavité du moule d'injection (13), on laisse se solidifier, dans une phase de maintien de pression (II), ladite masse fondue (12) dans la cavité et on éjecte, à une fin d'une phase de refroidissement résiduelle (III), ladite masse fondue (12) encore refroidie de la cavité en tant que pièce moulée par injection (14); dans lequel on détecte une variation d'une pression interne (p) de la cavité au cours de temps et on la représente sous la forme de courbe de pression interne (10, 10.M0 à 10.M4); dans lequel on utilise en tant que courbe de référence (10) au moins une courbe de pression interne d'un cycle de production dans lequel une pièce moulée par injection (14) produite répond à au moins une caractéristique de qualité prédéfinie; dans lequel on détermine, par une comparaison (V0), si une courbe de pression interne (10.M0) d'un cycle de production courant (Z0) dépasse au moins une valeur de seuil prédéfinie; et, dans le cas où la courbe de pression interne (10.M0) du cycle de production courant (Z0) dépasse ladite valeur de seuil, on modifie au moins un paramètre machine courant (M0) pour adapter une courbe de pression interne (10M1 à 10.M4) d'un cycle de production suivant (Z1 à Z4) à la courbe de référence (10); **caractérisé en ce qu'**on affecte au moins un paramètre machine (Ml à M4) à chaque phase (I à III) du cycle de production, ledit paramètre machine (Ml à M4) affecté exerçant une influence plus forte sur la pression interne (p) dans cette phase (I à III) du cycle de production que les paramètres machine non affectés; et **en ce qu'**on modifie lesdits paramètres de machine (Ml à M4) affectés dans une pluralité de cycles de production (Z1 à Z4) dans un ordre prédéfini et **en ce qu'**on modifie exactement un paramètre de machine (Ml à M4) affecté par cycle de production (Z0 à Z4).

2. Procédé selon la revendication 1, **caractérisé en ce qu'**on affecte, en tant que premier paramètre machine (M1) de l'ordre prédéfini, une vitesse d'injection à la phase d'injection (I); **en ce que** ladite vitesse d'injection est modifiée dans un premier cycle de production subséquent (Z1); et **en ce qu'**on utilise, en tant que la première valeur de seuil, une déviation prédéfinie par rapport au point de commutation.

3. Procédé selon la revendication 2, **caractérisé en ce que** dans le cas où un point de commutation de la courbe de pression interne (10.M0) du cycle de production courant (Z0) est antérieur à celui de la courbe de référence (10) on modifie la vitesse d'injection en diminuant celle-ci; et **en ce qu'**on détermine par une première comparaison (V1) si la courbe de pression interne (10.M1) du premier cycle de production subséquent (Z1) enregistrée avec la vitesse d'injection diminuée dépasse la première valeur de seuil.

4. Procédé selon la revendication 2, **caractérisé en ce que** dans le cas où un point de commutation de la courbe de pression interne (10.M0) du cycle de production courant (Z0) est postérieur à celui de la courbe de référence (10) on modifie la vitesse d'injection en augmentant celle-ci; et **en ce qu'**on détermine par une première comparaison (V1) si la courbe de pression interne (10.M1) du premier cycle de production subséquent (Z1) enregistrée avec la vitesse d'injection augmentée dépasse la première valeur de seuil.

5. Procédé selon l'une quelconque des revendications 1 à 4, **caractérisé en ce qu'**on affecte, en tant que second paramètre machine (M2) de l'ordre prédéfini, un niveau de pression de maintien à la phase de pression de maintien (II); **en ce que** ledit niveau de pression de maintien est modifié dans un deuxième cycle de production subséquent (Z2); et **en ce qu'**on utilise, en tant que deuxième valeur de seuil, une déviation prédéfinie par rapport à la pression interne maximale.

6. Procédé selon la revendication 5, **caractérisé en ce que** dans le cas où une pression interne maximale de la courbe de pression interne (10.M1) du premier cycle de production subséquent (Z1) est supérieure à celle de la courbe de référence (10) on modifie le niveau de pression de maintien en diminuant celui-ci; et **en ce qu'**on détermine par une seconde comparaison (V2) si la courbe de pression interne (10.M2) du second cycle de production subséquent (Z2) enregistrée avec le niveau de pression de maintien diminué dépasse la seconde valeur de seuil.

7. Procédé selon la revendication 5, **caractérisé en ce que** dans le cas où une pression interne maximale de la courbe de pression interne (10.M1) du premier cycle de production subséquent (Z1) est inférieure à celle de la courbe de référence (10) on modifie le niveau de pression de maintien en l'augmentant; et **en ce qu'**on détermine par une seconde comparaison (V2) si la courbe de pression interne (10.M2) du second cycle de production subséquent (Z2) enregistrée avec le niveau de pression de maintien augmenté dépasse la seconde valeur de seuil.

8. Procédé selon l'une quelconque des revendications 1 à 7, **caractérisé en ce qu'**on affecte, en tant que troisième paramètre machine (M3) de l'ordre prédéfini, une température d'outil à la phase de pression de maintien (II) et à la phase de refroidissement résiduelle (III); **en ce qu'**on modifie ladite température de l'outil dans un troisième cycle de production subséquent (Z3); et **en ce qu'**on utilise une déviation prédéfinie par rapport à une pression interne prédéfinie (p) de la courbe de référence (10) dans la phase de pression de maintien (II) et la phase de refroidissement résiduelle (III) en tant que troisième valeur de seuil.

9. Procédé selon la revendication 8, **caractérisé en ce que** dans le cas où une pression interne (p) de la courbe de pression interne (10.M2) du deuxième cycle de production subséquent (Z2) au point de scellage (t_{III}) de la courbe de référence (10) est supérieure à la pression du point de scellage (p_{III}) de la courbe de référence (10) on modifie la température de l'outil en la diminuant; et ce qu'on détermine par une troisième comparaison (V3) si la courbe de pression interne (10.M3) du troisième cycle de production subséquent (Z3) enregistrée avec la température d'outil diminuée dépasse la troisième valeur de seuil.

10. Procédé selon la revendication 8, **caractérisé en ce que** dans le cas où une pression interne (p) de la courbe de pression interne (10.M3) du deuxième cycle de production subséquent (Z2) au point de scellage (t_{III}) est inférieure à la pression du point de scellage (p_{III}) de la courbe de référence (10) on modifie la température de l'outil en l'augmentant; et **en ce qu'**on détermine par une troisième comparaison (V3) si la courbe de pression interne (10.M4) du troisième cycle de production subséquent (Z3) enregistrée avec la température de l'outil augmentée dépasse la troisième valeur de seuil.

11. Procédé selon l'une quelconque des revendications 1 à 10, **caractérisé en ce qu'**on affecte, en tant que quatrième paramètre machine (M4) de l'ordre prédéfini, un temps de pression de maintien à la phase de refroidissement résiduelle (III); **en ce qu'**on modifie le temps de pression de maintien dans un quatrième cycle de production subséquent (Z4); et **en ce qu'**on utilise l'atteinte d'un point de scellage en tant que quatrième valeur de seuil.

12. Procédé selon la revendication 11, **caractérisé en ce qu'**on modifie le temps de pression de maintien en l'augmentant; et **en ce qu'**on détermine par une quatrième comparaison (V4) si une courbe de pression interne (10.M4) du quatrième cycle de production subséquent (Z4) enregistrée avec le temps de pression de maintien augmenté dépasse la quatrième valeur de seuil.

13. Procédé selon la revendication 12, **caractérisé en ce que** dans le cas où la quatrième comparaison (V4) est réussie et la courbe de pression interne (10.M4) du quatrième cycle de production subséquent (Z4) enregistrée avec le temps de pression de maintien augmenté ne dépasse pas le quatrième valeur de seuil, l'ajustement de la courbe de pression interne (10.M1 à 10.M4) du cycle de production subséquent (Z1 à Z4) à la courbe de référence (10) est terminé; et **en ce que** dans le cas où la quatrième comparaison (V4) échoue et la courbe de pression interne (10.M4) du quatrième cycle de production subséquent (Z4) enregistrée avec le temps de pression de maintien augmenté dépasse la quatrième valeur de seuil, on modifie, dans un autre premier cycle de production subséquent (Z1), le premier paramètre de machine (M1) de l'ordre prédéfini.

14. Unité de moulage par injection (1) pour mettre en œuvre le procédé selon l'une quelconque des revendications 1 à 13, **caractérisée en ce qu'**au moins un paramètre machine courant (M0) d'un cycle de production courant (Z0) peut être entré par une unité de saisie de l'unité de moulage par injection (1); **en ce que** l'unité de moulage par injection (1) comprend une unité d'évaluation (16) comprenant une mémoire électronique de données, une unité de sortie et un processeur; **en ce que** la courbe de référence (10) peut être mémorisé dans ladite mémoire électronique de données; **en ce qu'**un programme d'évaluation peut être chargé dans le processeur, dans lequel ledit programme d'évaluation est apte à ajuster la courbe de pression interne (10.M1 à 10.M4) d'un cycle de production subséquent (Z1 à Z4) à la courbe de référence (10) en modifiant un paramètre de machine (Ml à M4) affecté dans un ordre prédéfini; et **en ce que** des courbes de pression interne (10, 10.M0 à 10.M4) peuvent être affichées sur l'unité de sortie.
